# EUROPEAN PATENT SPECIFICATION

(11) **EP 1 730 004 B1**
(45) Date of publication and mention of the grant of the patent: **22.04.2015**
(21) Application number: 05726115.8
(22) Date of filing: 24.03.2005
(51) Int. Cl.: B60R 21/231, B60R 21/233

(54) **SIDE AIRBAG MODULE**
SEITENAIRBAGMODUL
MODULE D'AIRBAG LATERAL

(30) Priority: 30.03.2004 US 557719 P; 31.03.2004 US 558297 P
(43) Date of publication of application: 13.12.2006
(73) Proprietor: KEY SAFETY SYSTEMS, INC., Sterling Heights, MI 48314 (US)
(72) Inventor: WIPASURAMONTON, Ponget, Rochester, MI 48307 (US); YOUNG, Jeffrey, Warren, MI 48093 (US)
(74) Representative: Gislon, Gabriele
(86) International application number: PCT/US2005/009855
(87) International publication number: WO 2005/097555

(56) References cited:
- EP-A- 1 044 854
- EP-A- 1 340 656
- US-B1- 6 270 113
- ANONYMOUS: "Side air bag system" RESEARCH DISCLOSURE, KENNETH MASON PUBLICATIONS, WESTBOURNE, GB, vol. 439, no. 14, November 2000 (2000-11), XP007127055 ISSN: 0374-4353

## Description

The present invention relates to an inflatable passenger side airbag module assembly designed to protect vehicle occupants during a side impact or rollover event.

In a side impact an airbag deploys between a vehicle occupant and any intruding object. To control the inflated shape and volume of an airbag it has been proposed to directly sew the front and rear panels of the airbag together. This construction provides chambers in the airbag such that portions of the front and rear panels are spaced apart. Other portions of the panels are in direct contact, particularly at the seam lines, thus reducing spacing which reduces the "cushioned depth" between the vehicle occupant and a side of the vehicle.

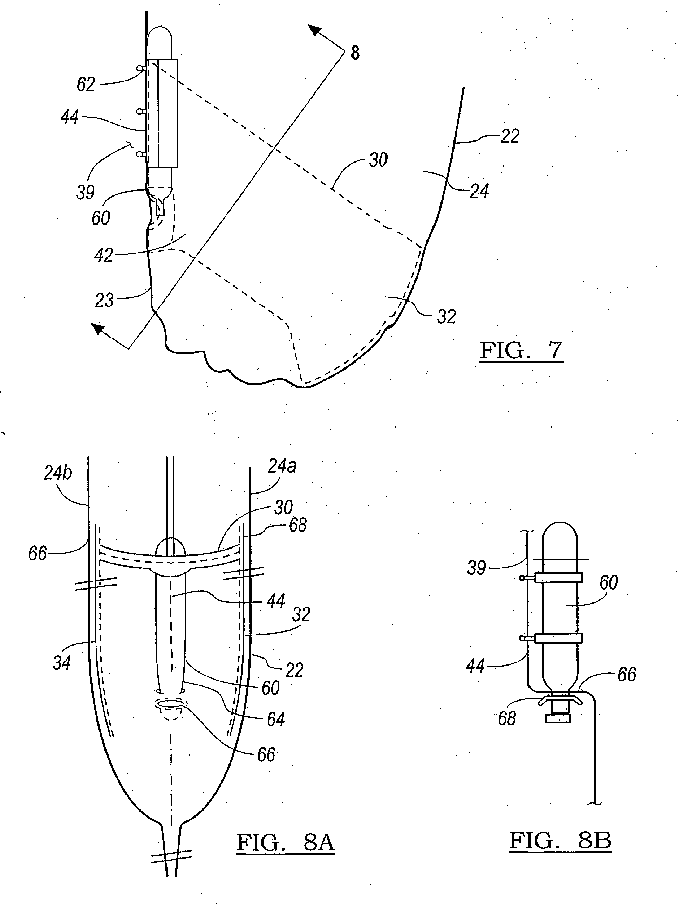

US6270113 discloses a side airbag module in which the chamber is provided with a tether extending to the edges of the airbag. The module has a vertically extending chamber and the inflator delivers inflation gas directly only into this vertically extending chamber. The inflator is located near the bottom of the airbag and does not extend through the internal tether as required by our new main claim. Studs on the inflator mounting arrangement are used for mounting the airbag module to a vehicle seat do the airbag is located primarily above the inflator as shown in Figure 8. The inflator first inflates the vertically extending chamber (25) to provide a better deployment of the airbag. EP 1044854 discloses a side airbag module provided with an intermediate cloth that divides the airbag into two chambers that communicate through openings in the intermediate cloth. The inflator is completely contained in the lower chamber.

The present invention as set forth in claim 1 provides a side impact restraint system having an airbag of sufficient length to extend from a vehicle seat to a vehicle occupant's chest. The airbag, upon inflation, is of sufficient height to extend from proximate the seat of the vehicle to a location generally adjacent to the shoulder of a 95^{th} percentile sized seated vehicle occupant such that the inflated airbag will lie between the vehicle occupant and a side portion of the vehicle. The airbag has two panels of fabric joined together to create a pair of inflatable chambers and a single internal tether forming a bridge between predetermined regions of the first and second panels. Upon inflation of the airbag the internal tether regulates the flow of inflation gas.
Figure 1 is a side plan view of an inflated airbag with a chamber separator.
Figure 2 is a plan view of the exterior of a subassembly of the airbag shown in Figure 1.
Figure 3 is a perspective view of the airbag of Figure 1 shown in vehicle position.
Figure 4 is rear view of the inflator insertion portion of the airbag shown in Figure 1.
Figure 5 is a sectional view of the airbag shown in Figure 1.
Figures 6a and 6b are a cross-sectional view and a plan view of the internal tether shown in Figure 5.
Figure 7 shows the airbag shown in Figure 4 with an inflator inserted therein.
Figures 8a and 8b represent the airbag shown in Figure 6 with an inserted inflator.

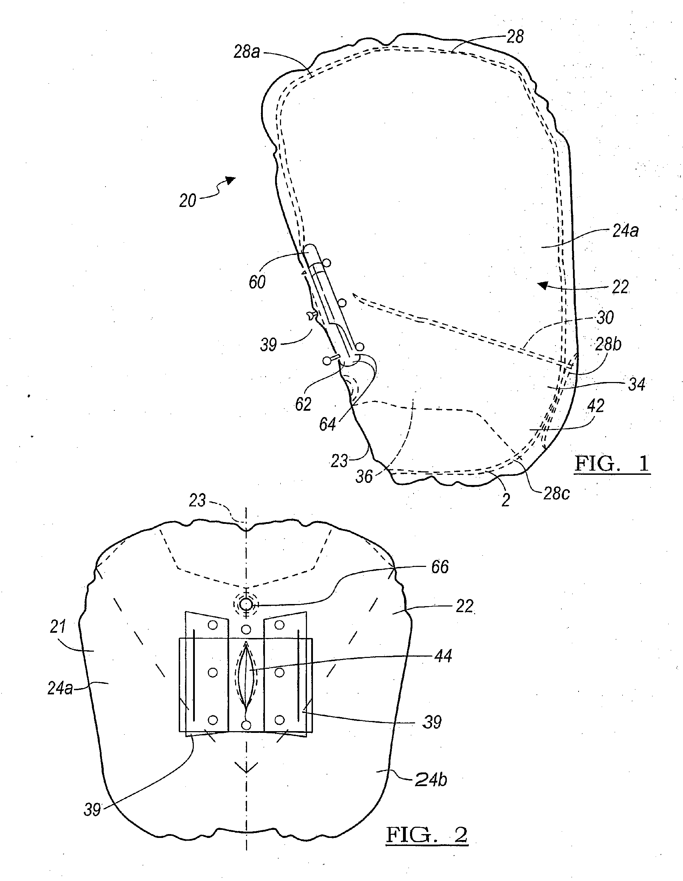

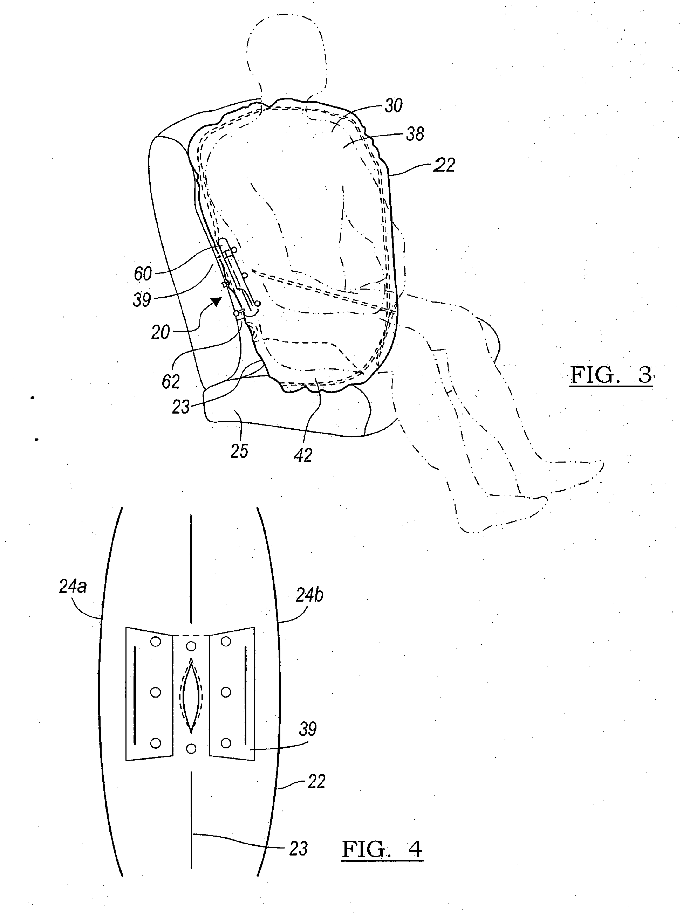

Figures1 and 3 are plan views of an inflated airbag with an angled interior tether used in a side impact module 20. The module 20 comprises an airbag 22 of sufficient length to extend generally the length of a seated vehicle occupant's torso seated in a vehicle. The airbag 22 extends from the vehicle's seat 25 to the shoulder of the vehicle occupant 30. In other applications the airbag 22 may extend higher than the vehicle occupant's shoulder to the vehicle's roof rail. The airbag 22 is of sufficient height such that when deployed the airbag 22 will lie between the seat of the vehicle and the upper torso and/or shoulder of the outboard seated vehicle occupant (95th percentile male). When inflated the airbag 22 will also lie against the vehicle's internal side.

In Figure 3 the airbag 22 comprises a single main panel 21 that is folded about its centerline 23. The folded-over portions of the main panel 21 are referred to as a first or front 24a and a second or rear panel 24b. While for strength reasons it is preferred the main panel 21 be a single piece of fabric. The airbag can be made of a plurality of separate panels of fabric joined together (along a centerline 23 or otherwise) as opposed to using a folded-over main panel 21. In the preferred embodiment of the invention, the main panel 21 is a woven fabric such as nylon that is uncoated on one side in a known manner to control air permeability. A low permeability, coated fabric may also be used.

With regard to the fabric, the fabric's air permeability and/or coating are chosen to match the required time the airbag should be inflated. The airbag 22 is manufactured by sewing the remaining three sides or periphery (after it is folded over centerline 23) and interior panel of the airbag together to form an inflatable airbag 22 having multiple chambers. The side of the airbag 22, as shown in Figure 1, is formed using a seam 28, which joins the panels 24a, 24b together. The sides of the panels are joined to one another by one or more chain seams 28a, 28b. Located above folded centerline 23 is a plurality of mounting features such as tabs 39 that are coupled to the panels 24a, 24b shown in figure 3 and 4.

The tabs 39 are used to reinforce the airbag and seal the insertion aperture 45. A plurality of fasteners from the inflator mount, not shown, is used to secure the centerline 23 of the airbag 22 to the seat. The airbag includes an inlet in the form of an opening 44 integrally formed between the panels 24a, 24b. In Figure 1, the opening 44 is located toward the bottom 42a of airbag 22 at the centerline 23, preferably below the internal tether 30. The internal tether 30 is positioned and oriented to form an initial inflation lower chamber 36, which is preferably positioned below the abdomen of a 5^{th} percentile female vehicle occupant.

An airbag inflator 60 is inserted in opening 44. The inflator 60 includes a plurality of mounting brackets 62 to permit the inflator 60 to be mounted to an adjacent structural component such as the seat frame or B-pillar of the vehicle or at a designated location along a seat back frame. The inflator 60 may be a solid propellant, hybrid, augmented or liquid inflator of known variety, which upon activation produces or supplies pressurized inflation gas to the airbag 22. The inflator 60 includes a plurality of axially oriented output ports 64 or a gas diverter housing (not shown) to direct the inflation gas into the airbag.

In Figures 1 and 3 the airbag 22 includes two inflatable airbag chambers 36, 38. An internal tether 30 is arranged relatively horizontally with respect to the vehicle seat cushion 25. The internal tether 30 is coupled to panels 24a, 24b and about the centerline 23 at a generally acute angle which is directed downward toward the vehicle's floor. Upon initiation of the inflator 60, gasses flow from the inflator along the length of the internal tether 30. Along the seam at the far end of the tether is an optional row of reinforcement stitches 28b.

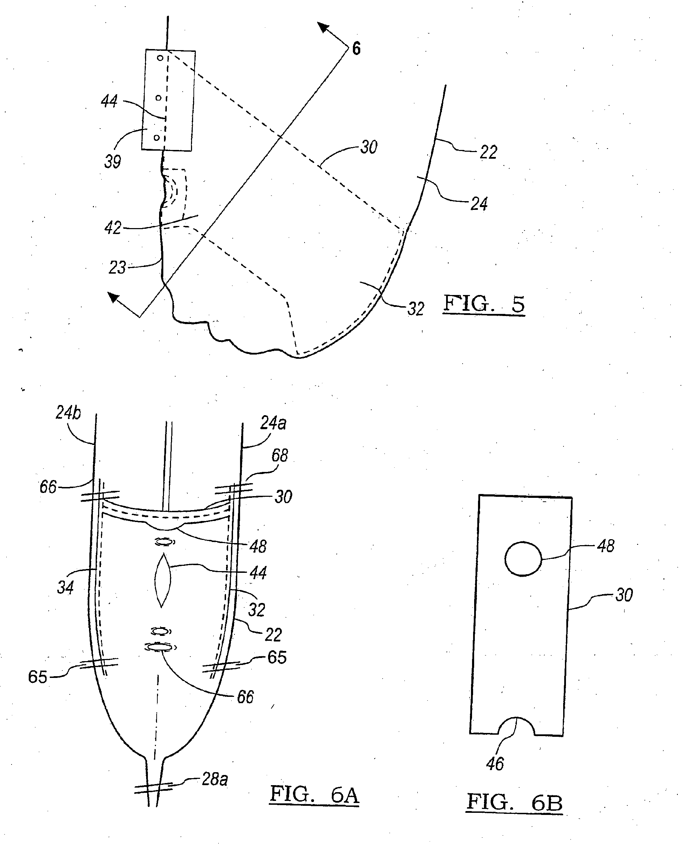

In Figures 5 and 6, disposed adjacent to the internal tether 30 is a pair of heat shields 32, 34 that extend to at least a portion of the sides of the lower chamber 36. The heat shields 32, 34 preferably comp rise a single sided silicon coated fabric. The heat shields 32, 34 extend along the sides of the airbag from the stitching to the periphery of the panels - Both heat shields 32, 34 are coupled to the airbag using two pairs of stitches. The heat shields 32, 34 are coupled to each other at the periphery of the airbag 22. The coupling of the two heat shield panels forms a pocket that protects the obverse side of the airbag from the discharging gasses.

The length of the internal tether 30 can vary depending upon the chosen incident angle with the airbag centerline 23. The airbag's width can be regulated by varying the width of the internal tether 30. The internal tether 30 has a pair of vents 46, 48 that facilitate the flow of gas between the first chamber 36 and the second chamber 38. The first vent 46 is located at the centerline of the main panel 23 and a semicircular cutout of the edge of the internal tether 30. The second vent is a 2.54 cm diameter hole in the internal tether 30. At least a portion of the inflator 60 extends through the first vent 46 to at least partially restrict the flow of deployment gass es into the second chamber 38. The inflator 60 reduces the available size of the passage and therefore restricts the flow of gasses through the first vent 46 during the initial inflation of the airbag 22 while allowing an increase flow of gasses through the first vent 46 later in the deployment event. The internal tether 30 regulates the width of the airbag 22 upon inflation while regulating the flow of compressed gasses from the lower 36 to upper chamber 38.

Figure 2 shows a sub assembly including the main panel 21 of Figure 1 laid flat upon a work surface. The centerline 23 is also visible. The two sets of tabs 39 for each of the airbag portions are located adjacent the opening 44. The small insertion opening 44 provides ease of construction and ability to restrict gas leakage. Each tab 39 is laid on one of the airbag panels, such as 24a, and placed in the desired location, which is identified by pre-printed markers or lines. Each tab 39 is then sewn to the airbag panels 24a, 24b.

In Figure 4 the tabs 39 are configured to be secured about the inflator 60 by bracket or clamp 62b to permit the inflation gasses to flow directly therein. A hole 66 is located along the centerline 23 to accommodate lead wires to the squib or the neck of the inflator.

It is not necessary to initially inflate the airbag 22 to its maximum volume, as various regions of the inflated airbag are not located near a seated vehicle occupant. The first chamber 36 is filled first with the inflation gas. The size and placement of these chambers will va ry with the particular vehicle and seating arrangement. By reducing the inflated volume of the airbag it is possible to use a smaller capacity inflator.

In Figure 5 the airbag 22 is divided into two major inflatable regions, or chambers 36, 38. Disposed between these chambers is the internal tether 30 that connects opposing regions of the front panel 24a and the rear panel 24b. Figure 5 shows the airbag 22 inflated. The interior tether 30 has a generally constant width, providing the inflatable chambers of the airbag with a generally rectangular cross section. Numeral 62 identifies the seams joining the internal tether to panel 24a. Numeral 65 identifies the sewn seams joining the heat shields to the side panels 24a, 24b.

Figure 6a is a cross-sectional view of the airbag 22 having an exemplary internal tether 30. The internal tether 30 includes sides 66, 68 that are sewn to a corresponding airbag panel 24a, 24b. The internal tether 30 includes previously mentioned vents. When the airbag 22 is inflated the panels 24a, 24b will tend to be forcefully pulled apart and resist further inflation of the chambers. The interior tether 30 as well as the main panel are made of woven fabric arranged at a bias of about 45°+-5° to the airbag panels 24a, 24b. The opening is preferably round. The sewn seam coupling one side of the internal tether to the side panel is generally in alignment with the sewn seam of the other side of the internal tether in the second panel. Figure 6b is a plan view of the internal tether 30 shown in figure 6a.

In Figure 7 the tabs 39 are wrapped about fastening member 62 of the inflator 60. The inflator 60 is show partially disposed within both the first and second chambers. In this regard, the inflator 60 is disposed through the first vent. Although wires are shown disposed through an aperture located along the centerline, a portion of the inflator 60 can extend through the aperture to allow easy electrical connection with the inflator.

Figure 8a is a cross-sectional view of the airbag 22 having an exemplary internal tether 30. The internal tether 30 includes the first vent with the inflator extending therethrough. When the airbag 22 is inflated the panels 24a, 24b tend to be pulled apart and resist further inflation of the chambers. The output ports 64 of the inflator 60 are positioned so that the inflation gasses impinge on the heat shields as the airbag is filled. Figure 8b is a side cross-sectional view of the airbag with inserted inflator 60. The inflator 60 is partially positioned through the hole 66 located along the centerline 23 of the main panel 21. The inflator 60 is coupled to the airbag using a snap ring 68.

The airbag is manufactured by sewing the internal tether and one heat shield to the main panel. Upon sewing the internal tether to panel 24b of airbag 22, panel 24a is positioned on top of panel 24b and the internal tether 30 and second heat shield 34 are then joined to panel 24b. With the panels 24a, 24b in this orientation, the top and sides of the airbag are secured together along peripheral seams 28, 28a, 28b. The airbag is then folded into a long, compact, cylindrical configuration. The various folds in the airbag 22 can be arranged such that the various seams of each of the internal tether 30 does not lie on top of each other, thus permitting the airbag 22 to be folded in a compact configuration. To keep the airbag 22 in this rolled configuration, the airbag 22 is enveloped in a tearable cover such as sewn fabric, polyurethane with tear seam or snap-together semi-hard plastic cover. The folded, enveloped airbag is then secured to the vehicle seat using a plurality of fasteners.

## Claims

1. A side impact airbag module (20) for restraining a vehicle occupant comprising:
an airbag that when inflated is of sufficient height to extend from a vehicle seat to a location generally adjacent the shoulder of a seated 95th percentile sized male vehicle occupant such that the inflated airbag will lie between the vehicle occupant and a side portion of the vehicle;
the airbag (22) including first and second panels (24a, 24b) that are joined together at a centerline (23), and at least one internal tether (30) forming a bridge between predetermined regions of the first and second panels to provide a pair of inflatable chambers (36, 38) such that upon inflation of the airbag these chambers are spaced from one another by the at least one internal tether (30), the internal tether (30) being coupled with the first and second panels (24a, 24b) about the centerline (23) at a generally acute angle which is directed downard toward a vehicle floor, the internal tether (30) includes a pair of vents (46, 48) therein to allow inflation gas to flow therethrough, **CHARACTERIZED BY** one of the vents (46) being adjacent the centerline (23), an inflator (60) located inside the airbag and extending through the vent (46) in the internal tether (3) adjacent the centerline (23) such that the inflator (60) is partially disposed within each of the inflatable chambers (36, 38), the inflator having a plurality of output ports (64) located so that inflation gas from the inflator is initially delivered from the inflator (6) into the first, lower, inflatable chamber (36), the internal tether regulating the width of the airbag upon inflation while regulating the flow of the compressed gasses from the lower to upper chamber and being positioned and oriented such that said initial inflation lower chamber (36) is positioned below the abdomen of a 5th percentile sized female vehicle occupant.

2. A side impact airbag module (20) for restraining a vehicle occupant as defined in claim 1, being formed of a single panel folded along said centerline (23) to form said first and second panels (24a, 24b).

3. A side impact airbag module (20) for restraining a vehicle occupant as defined in claim 1 or 2 wherein opposing ends of the at least one internal tether (30) are secured to the first and second panels (24a, 24b) at sewn seams.

4. A side impact airbag module (20) for restraining a vehicle occupant as defined in claim 3 wherein the sewn seam at one end of the internal tether (30) in the first panel (24a) is generally in alignment with the sewn seam of the other end of the internal tether in the second panel (24b).

## Patentansprüche

1. Airbagmodul (20) für einen Seitenaufprall für das Zurückhalten eines Fahrzeuginsassen, das aufweist:
einen Airbag, der, wenn er aufgeblasen ist, eine ausreichende Höhe aufweist, um sich von einem Fahrzeugsitz aus zu einer Stelle im Allgemeinen benachbart der Schulter eines sitzenden 95 Perzentil großen männlichen Fahrzeuginsassen zu erstrecken, so dass der aufgeblasene Airbag zwischen dem Fahrzeuginsassen und einem Seitenabschnitt des Fahrzeuges liegen wird;
wobei der Airbag (22) eine erste und eine zweite Bahn (24a, 24b), die miteinander an einer Mittellinie (23) verbunden sind, und mindestens einen inneren Tether (30) umfasst, der eine Brücke zwischen vorgegebenen Bereichen der ersten und der zweiten Bahn bildet, um ein Paar aufblasbare Kammern (36, 38) zu liefern, so dass beim Aufblasen des Airbags diese Kammern voneinander durch den mindestens einen inneren Tether (30) beabstandet sind, wobei der innere Tether (30) mit der ersten und der zweiten Bahn (24a, 24b) um die Mittellinie (23) unter einem im Allgemeinen spitzen Winkel verbunden ist, der nach unten in Richtung eines Fahrzeugbodens gerichtet ist, wobei der innere Tether (30) ein Paar Belüftungsöffnungen (46, 48) darin umfasst, um das Fließen Aufblasgases dort hindurch zu gestatten, **dadurch gekennzeichnet, dass** eine der Belüftungsöffnungen (46) benachbart der Mittellinie (23) ist, ein Gasgenerator (60) innerhalb des Airbags angeordnet ist und sich durch die Belüftungsöffnung (46) im inneren Tether (30) benachbart der Mittellinie (23) erstreckt, so dass der Gasgenerator (60) teilweise innerhalb einer jeden der aufblasbaren Kammern (36, 38) angeordnet ist, wobei der Gasgenerator eine Vielzahl von Austrittsöffnungen (64) aufweist, die so angeordnet sind, dass das Aufblasgas vom Gasgenerator anfangs vom Gasgenerator (60) in die erste untere aufblasbare Kammer (36) geliefert wird, wobei der innere Tether die Breite des Airbags beim Aufblasen reguliert, während der Fluss der verdichteten Gase von der unteren zur oberen Kammer reguliert wird, und so positioniert und ausgerichtet ist, dass die anfängliche aufblasbare untere Kammer (36) unterhalb des Unterleibes eines 5 Perzentil großen weiblichen Fahrzeuginsassen positioniert ist.

2. Airbagmodul (20) für einen Seitenaufprall für das Zurückhalten eines Fahrzeuginsassen nach Anspruch 1, der als eine einzelne Bahn ausgebildet ist, die längs der Mittellinie (23) gefaltet ist, um die erste und die zweite Bahn (24a, 24b) zu bilden.

3. Airbagmodul (20) für einen Seitenaufprall für das Zurückhalten eines Fahrzeuginsassen nach Anspruch 1 oder 2, bei dem die entgegengesetzten Enden des mindestens einen inneren Tethers (30) an der ersten und der zweiten Bahn (24a, 24b) an den genähten Säumen gesichert sind.

4. Airbagmodul (20) für einen Seitenaufprall für das Zurückhalten eines Fahrzeuginsassen nach Anspruch 3, bei dem der genähte Saum an einem Ende des inneren Tethers (30) in der ersten Bahn (24a) im Allgemeinen in Ausrichtung mit dem genähten Saum des anderen Endes des inneren Tethers in der zweiten Bahn (24b) ist.

## Revendications

1. Module de coussin d'air de protection contre un impact latéral (20), destiné à retenir l'occupant d'un véhicule, comprenant :
un coussin d'air, ayant à l'état gonflé une hauteur suffisante pour s'étendre d'un siège du véhicule vers un emplacement généralement adjacent à l'épaule d'un occupant mâle assis du véhicule, d'une taille correspondant au 95^{e} percentile, de sorte que le coussin d'air gonflé se situe entre l'occupant du véhicule et une partie latérale du véhicule ;
le coussin d'air (22) englobant des premier et deuxième panneaux (24a, 24b), reliés l'un à l'autre au niveau d'une ligne médiane (23), et au moins une attache interne (30) formant un pont entre des régions prédéterminées des premier et deuxième panneaux, pour former une paire de chambres gonflables (36, 38), de sorte que lors du gonflement du coussin d'air, ces chambres sont espacées l'une de l'autre par la au moins une attache interne (30), l'attache interne (30) étant accouplée aux premier et deuxième panneaux (24a, 24b) autour de la ligne médiane (23) à un angle généralement aigu, dirigé vers le bas vers un plancher du véhicule, l'attache interne (30) englobant une paire d'évents (46, 48) pour permettre l'écoulement du gaz de gonflement, **caractérisé en ce que** l'un des évents (46) est adjacent à la ligne médiane (23), un dispositif de gonflement (60) étant agencé à l'intérieur du coussin d'air et s'étendant à travers l'évent (46) dans l'attache interne (30) adjacente à la ligne médiane (23), de sorte que le dispositif de gonflement (60) est en partie agencé dans chacune des chambres gonflables (36, 38), le dispositif de gonflement comportant plusieurs orifices de sortie (64), agencés de sorte que le gaz de gonflement provenant du dispositif de gonflement est initialement distribué par le dispositif de gonflement (60) dans la première chambre gonflable inférieure (36), l'attache interne réglant la largeur du coussin d'air lors du gonflement en réglant l'écoulement des gaz comprimés de la chambre inférieure vers la chambre supérieure et étant positionnée et orientée de sorte que ladite chambre inférieure assurant le gonflement initial (36) est positionnée au-dessous de l'abdomen d'un occupant femelle du véhicule, d'une taille correspondant au 5^{e} percentile.

2. Module de coussin d'air de protection contre un impact latéral (20), destiné à retenir l'occupant d'un véhicule selon la revendication 1, formé à partir d'un seul panneau plié le long de ladite ligne médiane (23) pour former lesdits premier et deuxième panneaux (24a, 24b).

3. Module de coussin d'air de protection contre un impact latéral (20), destiné à retenir l'occupant d'un véhicule selon les revendications 1 ou 2, dans lequel les extrémités opposées de la au moins une attache interne (30) sont fixées sur les premier et deuxième panneaux (24a, 24b) au niveau de coutures cousues.

4. Module de coussin d'air de protection contre un impact latéral (20), destiné à retenir l'occupant d'un véhicule selon la revendication 3, dans lequel la couture cousue au niveau d'une extrémité de l'attache interne (30) dans le premier panneau (24a) est en général alignée avec la couture cousue de l'autre extrémité de l'attache interne dans le deuxième panneau (24b).
